# EUROPEAN PATENT APPLICATION

(11) **EP 2 600 063 A2**
(43) Date of publication of application: **05.06.2013**
(21) Application number: 13155823.1
(22) Date of filing: 19.02.2013
(51) Int. Cl.: F23R 7/00, F02C 6/00, F23C 6/04

(54) **Method of operating a gas turbine with staged and/or sequential combustion**

(71) Applicant: Alstom Technology Ltd, 5400 Baden (CH)
(72) Inventor: Therkorn, Dirk, 79761 Waldshut (DE); Bernero, Stefano, 5452 Oberrohrdorf (CH); Zhang, Mengbin, 8112 Otelfingen (CH); Eroglu, Adnan, 5417 Untersiggenthal (CH); Geng, Weiqun, 5405 Baden-Daettwil (CH)

(57) **Abstract**

The invention concerns a method of operating a gas turbine with staged and/or sequential combustion, in which the burners of a second stage or a second combustor are singularly and sequentially switched on during loading and switched off during de-loading. The total fuel mass flow and the compressor inlet guide vanes are adjusted at the same time to allow controlling gas turbine operation temperatures and engine power with respect to the required CO emission target.

## Description

### Technical Field

The invention refers to a method for operating a gas turbine with staged and/or sequential combustion. Additionally, the invention refers to a gas turbine for implementing the method for operating a gas turbine with staged and/or sequential combustion.

### Background of the Invention

Due to increased power generation by unsteady renewable sources (e.g. wind, solar), existing GT-based power plants are increasingly used to balance power demand and grid stability, thus improved operational flexibility is required. This implies that GT power plants are often operated at lower load than the base load design point, i.e. at lower combustor inlet and firing temperatures. Below certain limits, this reduces flame stability and burnout, with increased CO emissions production.

At the same time, emissions limit values and overall emission permits are becoming more stringent, so that is required to:
- Operate at lower emission values;
- Keep low emissions also at part load operation and during transient operation, as these also count for cumulative emission limits.

Combustion systems according to the state of the art are designed to cope with certain variability in operating conditions, e.g. by adjusting the compressor inlet mass flow or controlling the fuel split among different burners, fuel stages or combustors. A goal with this respect is given in gas turbines with staged or sequential combustion concept, as the possibility of operating the first and the second stage or combustor at different firing temperatures already allows an optimization of operation over wider load ranges.

From EP 0 646 704 A1 arises a method for controlling a gas turbine plant essentially comprising a compressor unit (1), a high-pressure combustion chamber (4), a high-pressure turbine (6), a low-pressure combustion chamber (9), a low-pressure turbine (12) and a generator (14), the quantity of fuel (FH) for the high-pressure combustion chamber (4) is adjusted by a corrected temperature signal composed of the value of the temperature (T13) at the outlet of the low-pressure turbine (12) reduced by the respective temperature rise (DELTA T) detectable there. This temperature signal (T13-DELTA T) is recorded by subtracting the temperature rise (DELTA T) produced by the quantity of fuel (FL) introduced into the low-pressure combustion chamber (9) from the temperature measured at the outlet of the low-pressure turbine (12). For the quantity of fuel (FL) for the low-pressure combustion chamber (9), the uncorrected temperature signal at the outlet of the low-pressure turbine (12) is used.

The invention according to EP 0 646 705 A1 proposes a method for providing partial load operation in a turbine plant. This gas turbine plant essentially comprises a compressor unit (1), an HP combustion chamber (4) arranged downstream of the compressor unit (1), an HP turbine (5) arranged downstream of this HP combustion chamber (4), an LP combustion chamber (8) which is arranged downstream of this HP turbine (5), operates by self-ignition and the hot gases of which act on an LP turbine (11). Reducing the quantity of fuel in the LP combustion chamber (8) to zero keeps the temperature at the outlet of the HP turbine (5) essentially constant. During the lowering of the quantity of fuel in the LP combustion chamber (8), the quantity of fuel for the HP combustion chamber (4) furthermore remains approximately constant and the temperature at the inlet to the HP turbine (5) thus likewise remains constant.

The gas turbine with respect to EP 0 718 470 A2 consists of a compressor (1), first and second combustion chambers (4, 8) with corresponding high and low pressure turbines (6, 10), and at least one generator (13). Part load operation of the gas turbine is achieved by adjusting the compressor lead vanes to reach loads of below 50 percent of nominal load. During adjustment, the high pressure turbine inlet temperature remains constant while the low pressure turbine inlet temperature falls continuously. The low pressure turbine outlet temperature remains constant. For loads below those achieved using vane adjustment, first the low pressure then the high pressure turbine inlet temperatures are reduced.

From EP 0 921 292 A1 arises a method for regulation a gas turbo-generator set operated with sequential combustion, in which the fuel quantity necessary for operating the first combustion chamber is first controlled as a function of a pressure prevailing at the outlet of the compressor. The ratio between this fuel quantity and this pressure is continuously updated by means of a factor reproducing the deviation of a temperature at the inlet into the first turbine from the desired value of this temperature. A fuel quantity necessary for operating the second combustion chamber is controlled as a function of a pressure prevailing at the inlet into the second turbine, and the ratio between this fuel quantity and this pressure is likewise continually updated by means of a factor reproducing the deviation of the inlet temperature into the second turbine from the desired value of this temperature. The inertias in the system are neutralized by means of this pressure backup regulation.

Moreover, CO emissions of gas turbine engines need reduction for the sake of protecting the environment. Such emissions are known to occur when there is not sufficient time in the combustion chamber to ensure the CO to CO₂ oxidation, and/or this oxidation is locally quenched due to contact with cold regions in the combustor. Since the combustor inlet and / or firing temperatures are smaller under part load conditions, the CO to CO₂ oxidation gets slower, thus CO emissions usually tend to increase under these conditions.

A reduction of CO emissions in turn might be exploited by lowering the gas turbine load at the parking point of a gas turbine. This reduces the environmental impact due to reduced CO₂ (and in some cases other pollutants) emissions and the overall cost of electricity due to less fuel consumption during engine parking. Finally the CO emission reduction might be invested in a reduction of first costs due to savings on a CO catalyst. In this case a CO catalyst might be avoided (or at least reduced). At the same time losses, which appear due a catalyst, will be removed (or at least reduced), and thereby the overall efficiency of the power plant increased.

According to the US 2012/0017601 A1 the basic of this state of art is a method for operating the gas turbine, which keeps the air ratio λ of the operating burner of the second combustor below a maximum air ratio λ**ₘₐₓ** during part load operation. This method is characterized essentially by three new elements and also by supplementing measures which can be implemented individually or in combination.

The maximum air ratio λ**ₘₐₓ** in this case depends upon the CO emission limits which are to be observed, upon the design of the burner and of the combustor, and also upon the operating conditions, that is to say especially the burner inlet temperature.

The first element is a change in the principle of operation of the row of variable compressor inlet guide vanes, which allows the second combustor to be put into operation only at higher part load. Starting from no-load operation, the row of variable compressor inlet guide vanes is already opened while only the first combustor is in operation. This allows loading up to a higher relative load before the second combustor has to be put in operation. If the row of variable compressor inlet guide vanes is opened and the hot gas temperature or turbine inlet temperature of the high-pressure turbine has reached a limit, the second combustor is supplied with fuel.

In addition, the row of variable compressor inlet guide vanes is quickly closed. Closing of the row of variable compressor inlet guide vanes at constant turbine inlet temperature TIT of the high-pressure turbine, without countermeasures, would lead to a significant reduction of the relative power.

In order to avoid this power reduction, the fuel mass flow, which is introduced into the second combustor, can be increased. The minimum load at which the second combustor is put into operation and the minimum fuel flow into the second combustor are therefore significantly increased.

As a result, the minimum hot gas temperature of the second combustor is also increased, which reduces the air ratio λ and therefore reduces the CO emissions.

The second element for reducing the air ratio λ is a change in the principle of operation by increasing the turbine exhaust temperature of the high-pressure turbine TAT1 and/or the turbine exhaust temperature of the low-pressure turbine TAT2 during part load operation. This increase allows opening of the row of variable compressor inlet guide vanes to be shifted to a higher load point.

Conventionally, the maximum turbine exhaust temperature of the second turbine is determined for the full load case and the gas turbine and possibly the downstream waste heat boiler are designed in accordance with this temperature. This leads to the maximum hot gas temperature of the second turbine not being limited by the TIT2 (turbine inlet temperature of the second turbine) during part load operation with the row of variable compressor inlet guide vanes closed, but by the TAT2 (turbine exhaust temperature of the second turbine). Since at part load with at least one row of variable compressor inlet guide vanes closed the mass flow and therefore the pressure ratio across the turbine is reduced, the ratio of turbine inlet temperature to turbine exhaust temperature is also reduced.

### Summary of the Invention

Prior concepts might not be sufficient to control CO emissions to a given value during the whole part load range due to the limitations in possible firing temperature increase for mechanical integrity reasons.

The above described limitations are addressed with the present invention by controlling at the same time the number of the burners in operation in the second stage or second combustor and the position of the compressor inlet guide vanes, thereby allowing operation of single burners at sufficiently low air-to-fuel ratio without the need of increasing the turbine operating temperatures.

Thus, the main technical problem solved by the invention consists in the fact of an improved gas turbine combustion performance at low load with respect to CO emissions, stable combustion, and combustion efficiency for sequential engines, allowing increased operational flexibility.

When de-loading a gas turbine, like for example a sequential combustion gas turbine known as GT24/GT26 by applicant, and for example according to EP 0 620 362 A1, wherein this document forming integral part of the present description, second stage burners are sequentially switched off individually or in groups, such that the burners remain in operation at the same hot gas temperature as at higher engine load, and thereby maintain in the same low CO emissions. According to the proposed method the TAT-strike (maximum local turbine outlet temperature) is kept unchanged, which results in a reduced TAT2 (average turbine outlet temperature of the second turbine) because the turbine outlet temperature is locally reduced downstream of the burners, which are switched off.

In order to maintain a sufficient hot gas temperature downstream of the burner in operation the VIGV (variable inlet guide vane) of the compressor is adjusted. For deloading a burner or burners are switched of and the VIGV can be opened at the same time in order to keep the same power output. For loading a burner or burners are switched on and the VIGV can be closed at the same time in order to keep the same power output. In case a burner has to be switched off for a slightly reduced load set point, the fuel mass flow would be controlled to be lower, because of the local hot gas temperature limitation and the load would drop consequently. This is compensated with opening the VIGV to adjust the load to the commanded set point. By opening the VIGV the intake mass flow increases, thus allowing an increase in fuel mass flow to the active burners. Further, the pressure ratio over the second turbine is increased, thereby increasing the hot gas temperature of the remaining operative burners for unchanged TAT-strike (loading is carried out analogous with reversed order).

Based on these findings the concept can be applied to an engine, which runs under sequential combustion (with or without a high pressure turbine) in an annular- and/or can-architecture.

Referring to a sequential combustion the combination of combustors can be disposed as follows:
At least one combustor is configured as a can-architecture, with at least one operating turbine.
Both, the first and second combustors are configured as sequential can-can architecture, with at least one operating turbine.
The first combustor is configured as an annular combustion chamber and the second combustor is built-on as a can configuration, with at least one operating turbine.
The first combustor is configured as a can-architecture and the second combustor is configured as an annular combustion chamber, with at least one operating turbine.
Both, the first and second combustor are configured as annular combustion chambers, with at least one operating turbine.
Both, the first and second combustor are configured as annular combustion chambers, with an intermediate operating turbine.

In addition to the method, a gas turbine for implementing the method is a subject of the invention. Depending upon the chosen method or combination of methods, the design of the gas turbine has to be adapted and/or the fuel distribution system and air system have to be adapted in order to ensure the feasibility of the method.

Especially, also manufacturing tolerances leads to different pressure losses and flow rates during operation. The tolerances are selected so that they have practically no influence upon the operating behavior during normal operation, especially at high part load and full load. At part load with high air ratio λ, the combustor can, however, is operated under conditions in which even small disturbances can have a significant influence upon the CO emissions.

The process can be carried out according to different embodiments. A first embodiment uses the average measured exhaust temperature TAT2.
1. Process in transient state with control of the TAT2 (the average measured exhaust temperature of the low pressure turbine):
   1.1 Gas turbine is de-loaded until CO limit is reached.
   1.2 Individual burners of the second combustor, respectively the second stage, are switched off to reduce load. Switching off a burner leads to a re-distribution of the fuel flow to the remaining burners in operation with consequently increased local hot gas temperature. Additionally the difference between the highest TAT2 reading and the arithmetic average increases. With constant fuel flow the load would remain about constant.
   1.3 With a schedule for the average TAT2 limit or a control of the TAT2 limit using the measured TAT-strike or a margin from the measured TAT-strike to a maximum allowable TAT-strike the local hot gas temperatures after the burner in operation is controlled to a target temperature. The TAT2 limit schedule can for example be based on relative load, or the number of burner in operation. Due to the change in TAT2 limit the fuel mass flow is reduced, and consequently the power is reduced.
   1.4 To reach the target load the actual load is finally adjusted with the inlet guide vanes and leads to the intended CO emission reduction as described in the previous section. When opening the inlet guide vanes the TAT2 decreases. The fuel flow can be increased again to increase the power to the target load.

With two parameters, TAT2 limit schedule or TAT2 limit control and number of burner switched off, the CO emissions and the hot gas temperature limits can be adjusted for every load point.

A second embodiment uses the average measured maximum local exhaust temperature (TAT-strike).
2. Process with control of maximum local exhaust temperature:
   2.1 At a low load of the gas turbine, the CO limit is reached.
   2.2 A burner of the second combustor or combustion stage is switched off to reduce CO by redistributing the fuel which was previously injected to the switched off burner to the remaining active burners thereby recovering the local hot gas temperature.
   2.3 If a TAT2_strike (local measured maximum exhaust temperature of the second turbine) is increased beyond a maximum allowable value the controller reduces fuel mass flow by lowering the average TAT2 set point. Due to the lowered fuel mass flow the power is reduced.
   2.4 The target load is finally adjusted with the inlet guide vanes and leads to the intended CO emission reduction as described in the previous section. When opening the inlet guide vanes the TAT2 decreases. The fuel flow can be increased again to increase the power

TAT2-strike can be used in case of switched off burners equivalently to the use of the TAT2 limit. In contrast to the disclosed method the TAT2 limit was kept constant for lower loads in the prior art. The number of burner in operation is used to control CO emissions and can be adjusted for every load point.

Furthermore, the method of operation in accordance with the invention refers to the location of the burners to be switched and is defined based on the identification of the burner, which produce the highest CO emissions and single outlet temperature reading from the first or second combustor, under custody of measurement of the local emissions points.

The advantages of the invention are as follows:
- The operating range of the gas turbine can be extended to lower load points for a given CO emission limit.
- CO emission can be reduced at low load points to the power plant air permit limit.
- No lifetime penalty due to increased TAT-strike.
- No limitation regarding operation time or load gradient in this lower load range.
- Burners which are main responsible of CO production (e.g. split line burners) can be targeted and switched off first, giving a maximum benefit.
- The process can be controlled in closed-loop for optimized emissions and lifetime.
- In order to avoid too frequent burner switching when load is varying the burner valves are switched on or off with a hysteresis.

The advantages associated with this invention are as follows:
CO emissions are reduced especially at lower part-load conditions. Therefore, the gas turbine power plant can support the grid with an increased power range. Additionally the gas turbine can be parked at lower loads during periods, where low power output is targeted by the power plant operator.
   - With the increased load range the power plant will be more often called to support the grid, because load flexibility is getting more important with increasing contribution of renewable power.
   - The power plant can be parked at lower loads in periods of low power demand leading to lower fuel consumption and overall reduced cost of electricity.
   - Environmental benefit due to reduced CO emissions, lower parking point (thus less fuel consumption and CO₂ production) or a combination of both advantages.
   - Possibility of eliminating an expensive CO catalyst. Therefore first costs are reduced.

When using a setup including dilution air switching / variation between the combustor cans further advantages arise:
- Further CO reduction, with all advantages described above, due to increased volume for CO oxidation with origin in the first combustor.
- Reduction of circumferential temperature gradients between the different can combustors. Therefore the turbine inlet profile is improved and lifetime of turbine parts is improved.

Control logic for defined CO and maximum turbine outlet temperatures control as a function of relative load, number of burner in operation or constant parameter like TAT-strike forming integral part of the present invention.

### Brief description of the drawings

The invention is shown in Fig. 1 to 3 based on exemplary embodiments:
Fig. 1 schematically shows a gas turbine with sequential combustion for implementing the method according to the invention;
Fig. 2 schematically shows a cross section of the second combustor with burners;
Fig. 3 schematically shows an operational concept with burner switching and temperature and VIGV control.

### Embodiment and method of the Invention

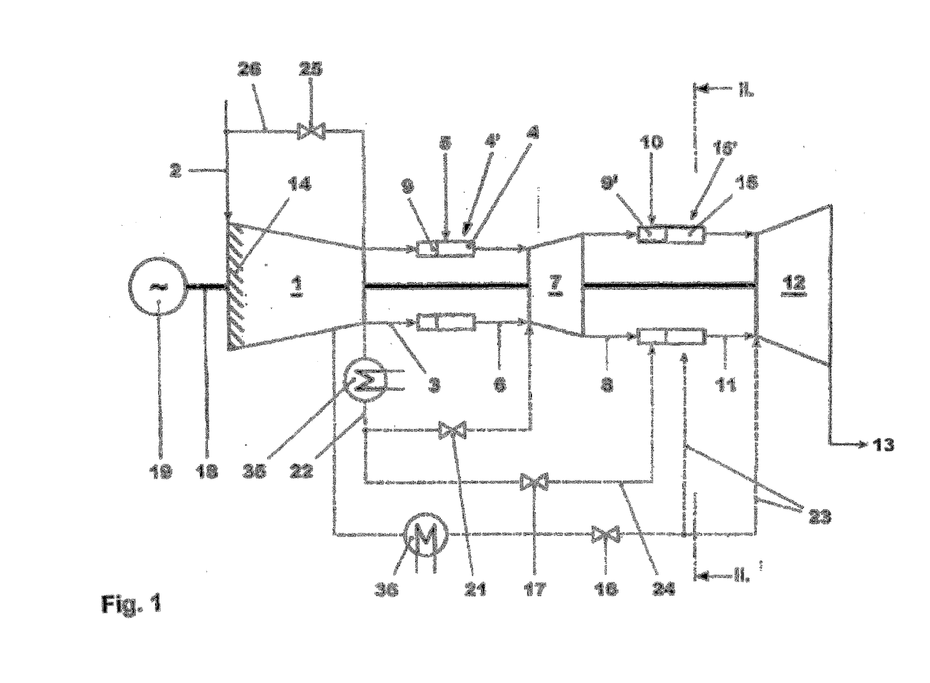

Fig. 1 schematically shows a gas turbine with sequential combustion for implementing the method according to the invention. It comprises a compressor 1, a first combustor 4' comprising a number of burners 9 and a combustion chamber 4, a first turbine 7, a second combustion chamber 15' comprising a number of burners 9' and combustion chamber 15, and a second turbine 12. Typically, it includes a generator 19 which at the cold end of the gas turbine, that is to say at the compressor 1, and is coupled to a shaft 18 of the gas turbine. The first combustor 4' and the second combustor 15' can be an annular architecture or a can architecture, while the first turbine 7 is optional.

The can architecture comprises a plurality of burners with subsequent cans arranged in an annular array about the circumference of the turbine shaft, which enables an individual combustion operation of each can 4, 15, and which will cause no harmful interactions among individual cans during the combustion process.

The annular architecture comprises a plurality of burners arranged in an annular array about the circumference of the turbine shaft, with subsequent annular combustion chambers 4, 15 which facilitates cross ignition between different burners.

A fuel, gas or oil is introduced via a fuel feed 5 into the burner 4 of the first combustor 4', mixed with air which is compressed in the compressor 1, and combusted in the combustion chamber 4. The hot gases 6 are partially expanded in the subsequent first turbine 7, performing work.

As soon as the second combustor is in operation, additional fuel, via a fuel feed 10, is added to the partially expanded gases 8 in burners 9' of the second combustor 15', and combusted in the second combustion chamber 15. The hot gases 11 are expanded in the subsequent second turbine 12, performing work. The exhaust gases 13 can be beneficially fed to a waste heat boiler of a combined cycle power plant or to another waste heat application.

For controlling the intake mass flow, the compressor 1 has at least one row of variable compressor inlet guide vanes 14.

As an additional option, in order to be able to increase the temperature of the intake air 2, provision can be made for an anti-icing line 26 through which some of the compressed air 3 can be added to the intake air 2. For control, provision is made for an anti-icing control valve 25. This is usually engaged on cold days with high relative air moisture in the ambient air in order to forestall a risk of icing of the compressor 1.

In this example some of the compressed air 3 is tapped off as high-pressure cooling air 22, re-cooled via a high-pressure cooling air cooler 35 and fed as cooling air 22 to the first combustor 4' (cooling air line is not shown) and to the first turbine.

The mass flow of the high-pressure cooling air 22, which is fed to the high-pressure turbine 7, can be controlled by means of a high-pressure cooling air control valve 21 in the example.

Some of the high-pressure cooling air 22 is fed as so-called carrier air 24 to the burner lances of the burners 9' of annular combustion chamber 15 of the second combustor 15'. The mass flow of carrier air 24 can be controlled by means of a carrier-air control valve 17.

Some of the air is tapped off, partially compressed, from the compressor 1, re-cooled via a low-pressure cooling air cooler 36 and fed as cooling air 23 to the combustion chamber 15 of the second combustor 15' and to the second turbine. As a further option the mass flow of cooling air 23 can be controlled by means of a cooling-air control valve 16 in the example.

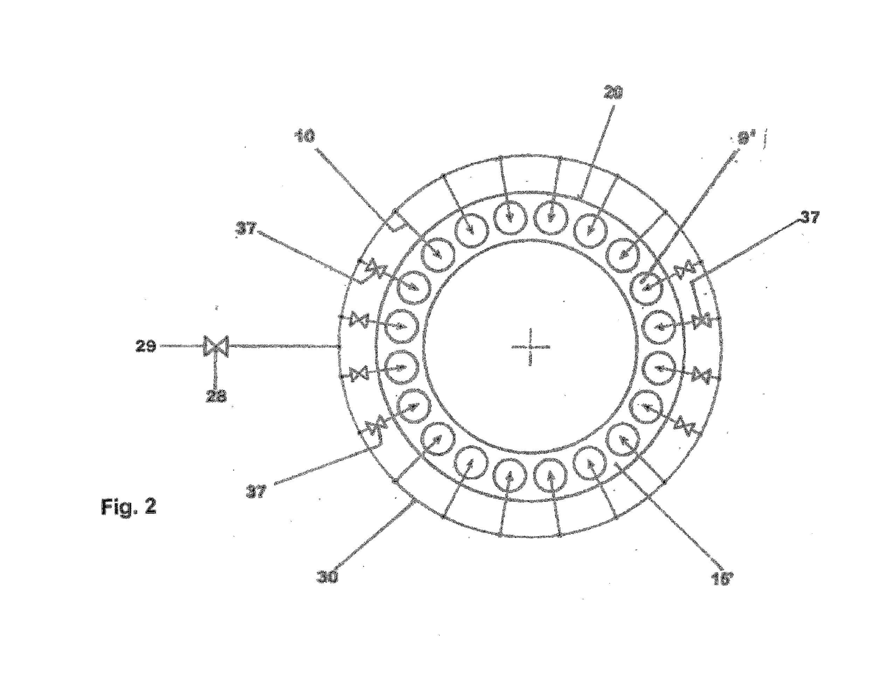

One or more of the combustors can be constructed as annular combustors, for example, with a large number of individual burners 9 resp. 9', as is generic shown in Fig. 2 by way of example of the second combustor. Each of these burners 9 resp. 9' is supplied with fuel via a fuel distribution system and a fuel feed 10, figuratively in accordance with Fig. 2.

Fig. 2 shows a section through for example the second combustion chamber 15' as an annular combustion chamber of a gas turbine with sequential combustion, and also the fuel distribution system with a fuel ring main 30 to the individual burners 9'. The same fuel distribution is possible with respect to a second combustion chamber 15 comprising of cans. The burners 9'are provided with individual on/off valves 37 for deactivating each burner 9' for controlling the fuel flow in the fuel feeds 10 to the respective burner of 9, 9' of the first and second combustor 4', 15'.

By closing individual on/off valves 37, the fuel feed to individual burners 9' of the annular combustion chamber 15 (or to the burners of every can) is stopped and optional the fuel can be distributed to the remaining burners 9', wherein the overall fuel mass flow is controlled via a control valve 28. As a result, the air ratio λ of the burners 9 in operation is reduced.
Item 20 shows the external housing of the gas turbine including a stator arrangement (not shown) in connection with the compressor and turbines

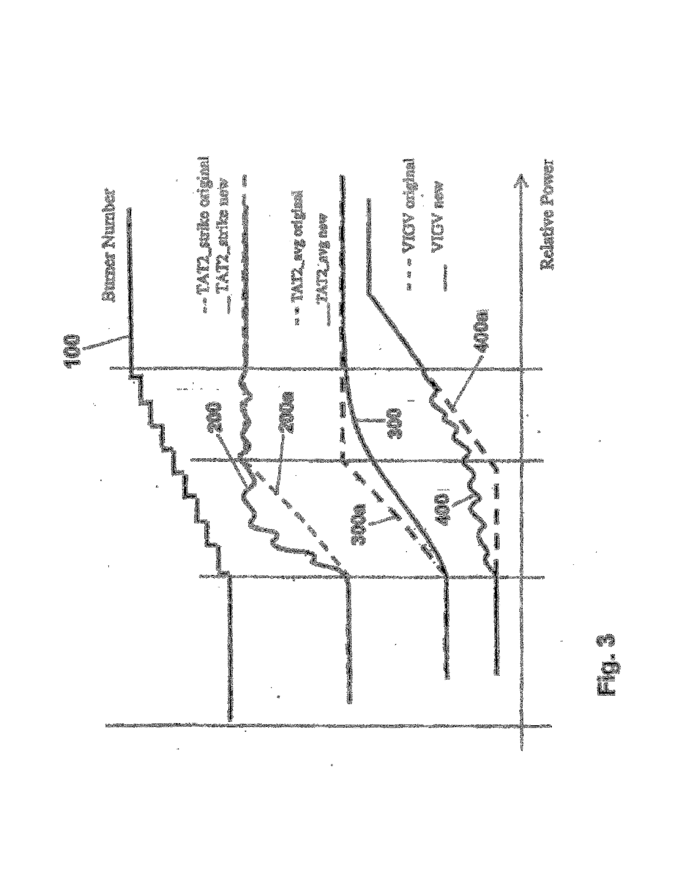

Fig. 3 shows an operational concept with burner switch/off and temperature and VIGV control, in relation to the conventional process (indicated as original). When de-loading the gas turbine, single second stage burners 100 are sequentially switched off, in the manner that the remaining burners 100 operate at the same hot gas temperature as at higher engine load, thereby maintaining the same low CO emissions.

With respect to the original standard operation concept, the TAT2_avg 300 was reduced in order to keep the local maximum local turbine outlet temperatures TAT2_strike 200 constant, as long as they correlate with the highest burner hot gas temperatures.
This is achieved by opening VIGV 400 at the same time in order to keep the same power output.

The curves shown in Fig. 3 with respect to original method and new operational method according to the invention are considered qualitatively. The different shape of the curves (100-400) is schematic, and forms the basis for achieving the objectives of the invention.

### List of designations

- 1: Compressor
- 2: Intake air
- 3: Compressed air
- 4: First combustion chamber (annular combustion chamber/ cans)
- 5: Fuel feed
- 6: Hot gases
- 7: First turbine
- 8: Partially expanded hot gases
- 9: Burner of first combustor
- 10: Fuel feed
- 11: Hot gases
- 12: Second turbine
- 13: Exhaust gases (for the waste heat boiler)
- 14: Variable compressor inlet guide vanes
- 15: Second combustion chamber (annular combustion chamber/ cans)
- 16: Low-pressure cooling-air control valve
- 17: Carrier-air control valve
- 18: Shaft
- 19: Generator
- 20: External body housing of the gas turbine
- 21: High-pressure cooling-air control valve
- 22: High-pressure cooling air
- 23: Cooling air
- 24: Carrier air
- 25: Anti-icing control valve
- 26: Anti-icing line
- 28: Fuel control valve
- 29: Fuel feed
- 30: Fuel ring main
- 35: High-pressure cooling-air cooler
- 36: Low-pressure cooling-air cooler
- 37: Individual on/off valve
- TAT: Turbine exhaust temperature
- TAT1: Turbine exhaust (outlet) temperature of the first turbine
- TAT2: Turbine exhaust (outlet) temperature of the second turbine
- TIT: Turbine inlet temperature
- TIT1: Turbine inlet temperature of the first turbine
- TIT2: Turbine inlet temperature of the second turbine
- 4': First combustor
- 9': Burner of second combustor
- 15': Second combustor
- 100: Burner number
- 200: TAT2_strike new resp. inventive
- 200a: TAT2_strike original resp. state of art
- 300: TAT2_avg (avg = average) new resp. inventive
- 300a: TAT2_avg original resp. state of art
- 400: VIGV new resp. inventive
- 400a: VIGV original resp. state of art
- VIGV: Compressor inlet guide vanes
- AEV: Premix burner, especially for first combustor
- SEV: Reheat burner, especially for second combustor

## Claims

1. A method of operating a gas turbine with staged and/or sequential combustion, in which the burners of a second stage or a second combustor are sequentially switched on during loading and switched off during de-loading, whereby the total fuel mass flow and the compressor inlet guide vanes are adjusted at the same time to allow controlling gas turbine operation temperatures and engine power with respect to the required CO emission target.

2. Method as claimed in claim 1, **characterized in that** while de-loading of the gas turbine is carried out, the single burners of the second stage or sequential combustor are switched off, such that the burners remaining in operation are operated at the same hot gas temperature as at higher gas turbine load, with a reduction of TAT2_avg in order to keep the local maximum turbine outlet temperatures TAT2_strike, and VIGV are adjusted at the same time in order to achieve the specified load point.

3. Method as claimed in claim 1, **characterised in that** the total fuel mass flow and the compressor inlet guide vanes positions are adjusted in response to a constant power output during the burner switching process.

4. Method as claimed in one of the claims 1 to 3, **characterized in that** burner valves are switched on or off with a hysteresis.

5. Method as claimed in one of the claims 1 to 4, **characterized in that** the method comprises the following steps for deloading:
a) Switching off at least one burner;
b) Opening the VIGV to keep the same load as before the burner switching off.

6. Method as claimed in one of the claims 1 to 5, **characterized in that** the method comprises the following steps for loading:
a) Switching on at least one burner;
b) Closing the VIGV to keep the same load as before the burner switching on.

7. Method as claimed in one of the claims 1 to 6, **characterized in that** the process in transient state comprising the following steps to reach a target load:
a) Load reduction by closing VIGV with increasing CO;
b) Switching off individual burners, if CO limit is reached;
c) Temporary increased local hot gas temperature, because total fuel flow is re-distributed to the burners remaining on;
d) Reduction of hot gas temperature to the desired level by fuel flow reduction leading to a temporary load reduction;
e) Opening VIGV to recover target load.
f) Further load reduction according to steps a) through e) until the target load is reached.

8. Method as claimed in one of the claims 1 to 7, **characterized in that** the burner switching point is controlled to a single or a combination of the following parameter:
a) Gas turbine load;
b) CO emissions;
c) Combustor pulsations;
d) Turbine inlet temperature;
e) Turbine outlet temperature;
f) Highest turbine outlet temperatures measurements;
g) Fuel mass flow as a function of the number of burners in operation;
h) Turbine inlet temperature calculated after the burner in operation;
i) Fuel composition;
j) Inlet pressure to the second stage or combustor;
k) Inlet temperature to the second stage or combustor.

9. Method as claimed in one of the claims 1 to 8, **characterized in that** the location of the switched burner is based on:
a) Identification of the burner which produce the highest CO emissions;
b) Reading single outlet temperature from the first or the second combustor;
c) Measuring local emission points;
d) Grouping of neighboring burners;
e) Circumferential re-adjusting of switched burners.

10. Method as claimed in claim 9, **characterised in that** the first and second combustor have an annular-architecture or a can-architecture or a combination thereof.

11. Method as claimed in one of the claims 1 to 10, **characterized in that** to increase the temperature of the intake air some of the compressed air from the compressor can be added to the intake air.

12. Method as claimed in one of the claims 1 to 11, **characterized in that** a partial flow of compressed or partially compressed compressor air is added at least to upstream of the second combustor.

13. Method as claimed in one of the claims 1 to 12, **characterized in that** at least one cooling air temperature and/or at least one cooling air mass flow is controlled as a function of the load.

14. Gas turbine with at least one compressor, a first combustor which is connected downstream to the compressor, and the hot gases of the first combustor are admitted at least to an intermediate turbine or directly or indirectly to a second combustor, wherein the hot gases of the second combustor are admitted to a further turbine or directly or indirectly to an energy, and a controller **characterized in that** the controller is configured to operate the gas turbine according one of the methods of claims 1 to 13.

15. Gas turbine according to claim 14 **characterized in that** it comprises an individual burner control or shut off valve arranged in at least one fuel line to at least one burner of the first and/or second combustor of the gas turbine, whereby a fuel distribution system includes a first fuel control valve and also a first fuel ring main for distribution of the fuel to the burners.
